# EUROPEAN PATENT APPLICATION

(11) **EP 1 862 701 A1**
(43) Date of publication of application: **05.12.2007**
(21) Application number: 07010733.9
(22) Date of filing: 30.05.2007
(51) Int. Cl.: F16H 3/093

(54) **Double clutch transmission**

(30) Priority: 30.05.2006 JP 2006150421
(71) Applicant: MITSUBISHI JIDOSHA KOGYO KABUSHIKI KAISHA, Tokyo 108-8410 (JP); MITSUBISHI JIDOSHA ENGINEERING KABUSHIKI KAISHA, Okazaki-shi Aichi (JP)
(72) Inventor: Komori, Katsuhiro, Okazaki-shi Aichi (JP)
(74) Representative: Vossius & Partner

(57) **Abstract**

An input system (2) includes a first input shaft (9) provided with forward drive gearwheels of one gear group of two predetermined gear, a second input shaft (10) provided with forward drive gearwheels of the other gear group and being rotatable about an axial center of the first input shaft, and clutches (12,13) provided at end portions of the first and second input shafts. An output system (30) includes first and second output shafts (40,41) provided parallel to the first and second input shafts, a forward gear mechanism (20) including forward driven gearwheels provided on the first and second output shafts meshing with the forward drive gearwheels and synchromesh mechanisms, and a reverse gear mechanism (21) including a reverse driven gearwheel (33), a synchromesh mechanism (50), and an idler gearwheel (60) being rotatable together with a forward driven gearwheel (37) for a low gear meshing with the reverse driven gearwheel. A final reduction ratio of one of the output shafts which outputs rotational power from the reverse driven gearwheel is larger than a final reduction ratio of the other of the output shafts.

## Description

The present invention relates a double clutch transmission which enables continuous gear ratio changes by a synchromesh mechanism which suppresses the disruption of power transmission to a minimum level using two clutches and two input shafts.

In automatic transmissions for vehicles (automobiles), there is a transmission referred to as a double clutch transmission which enables continuous gear ratio changes while suppressing the loss of power that is in transmission by utilizing a constant mesh (meshing between drive gearwheels and driven gearwheels) gear mechanism.

In this double clutch transmission, a construction is adopted in which an input system which uses two input shafts having drive gearwheels and two clutches and an output system which uses two output shafts having driven gearwheels and synchromesh mechanisms are combined together. Specifically, as the input system, for example, a plurality of forward gears are divided into gear groups; a group of even-numbered gears and a group of odd-numbered gears, and drive gearwheels of the odd-numbered gear group are provided on either a first input shaft or a second input shaft that rotates on the periphery of the first input shaft, both the input shafts being connected to clutches, respectively, while drive gearwheels of the even-numbered gear group are provided on the other input shaft, whereby rotational power of an engine is transmitted to the first or second input shaft via the corresponding clutch. In addition, as the output system, a construction is adopted in which driven gear wheels, which are adapted to mesh with the mating drive gear wheels, are allocated together with synchromesh mechanisms on first and second output shafts which are provided in parallel to the first and second input shafts.

According to these input and output systems, for example, by making use of a duration when a gear shift of the odd-numbered gear group is completed and the rotational power of the engine that is inputted into the first input shaft from the corresponding clutch is changed in speed for output from one of the output shaft, a drive gearwheel for the next higher or lower gear on the even-numbered gear group is synchronized with a speed which is transmitted from the other output shaft by means of a synchromesh mechanism, so that a gear ratio change for the next higher or lower gear can be prepared. Because of this, when a currently active odd-numbered gear is shifted to the next higher or lower even-numbered gear, in the event that the clutch which is connecting the first input shaft to the engine is disengaged, while the other disengaged clutch is engaged to switch the power transmission to a transmission from the second input shaft, the currently active gear is shifted to the next higher or lower even-numbered gear on the spot. Furthermore, also when the currently active even-numbered gear is shifted to the next higher or lower odd-numbered gear, the next higher or lower odd-numbered gear on the first input shaft is synchronized with the vehicle speed for preparation for a gear shift to the next gear while the rotational power of the engine is transmitted via the second input shaft, a gear shift to the next higher or lower odd-numbered gear is completed. Therefore, gear shifts from low-speed gear to high-speed gear, that is, a first gear to a sixth gear can be performed quickly and continuously while suppressing the loss of power or drive in transmission, that is, quick and continuous gear ratio changes can be performed from the first gear to the sixth gear.

Incidentally, in the double clutch transmission, a reverse gear mechanism is equipped separately from a forward gear mechanism for shifting into a reverse gear. In many cases, a construction is adopted in which a drive gearwheel for a low gear provided on an input shaft is made to mesh with a driven gearwheel for a reverse gear on one of a first and second output shafts via an idler gearwheel provided on a third output shaft. Namely, a construction is adopted in which when a synchromesh mechanism provided together with the drive gearwheel for the reverse gear is activated, a reverse output (a reverse rotation) is routed from the second output shaft to the third output shaft so as to be outputted from the idler gearwheel.

However, since the construction in which the third output shaft with the idler gearwheel attached thereto is provided requires the third output shaft to be disposed in parallel to the input shaft as well as the first and second output shafts, the enlargement in size of the double clutch transmission is called for.

Then, as is disclosed in JP-W-2003-503662, there has been proposed a technique in which an idler gearwheel is mounted on a driven gearwheel for a low gear (this driven gearwheel meshing with a drive gearwheel for the low gear) which is provided on one of output shafts, and the idler gearwheel is made to mesh with a reverse driven gearwheel provided on the other output shaft, so that the one of the output shafts is made to double as an idler shaft.

Since this construction really obviates the necessity of the third output shaft for the idler gearwheel, a resulting double clutch transmission can be made compact in size. However, since a reduction ratio for the reverse gear depends on meshing between the drive gearwheel and the driven gearwheel for the low gear and meshing between the idler gearwheel and the reverse driven gearwheel, it becomes difficult to increase the relevant reduction ratio. In recent years, while gearwheels whose diameters are small tend to be used so as to make compact double clutch transmissions, as this really occurs, it becomes difficult to use a large reduction ratio which is suitable for the reverse gear due to the restriction of gearwheels to be used.

It is therefore an object of the invention to provide a double clutch transmission which can increase a reduction ratio of a reverse gear while maintaining the construction which obviates the necessity of the idler shaft.

In order to achieve the object, according to the invention, there is provided a double clutch transmission, comprising:
an input system, comprising:
   an input shaft portion, comprising:
      a first input shaft, provided with forward drive gearwheels of one gear group of two predetermined gear groups into which a plurality of forward gears are divided; and
      a second input shaft, provided with forward drive gearwheels of the other gear group, and being rotatable about an axial center of the first input shaft on an outer circumferential surface of the first input shaft, and
   clutches, provided at end portions of the first and second input shafts, respectively, for transmitting rotational power of an engine to the first or second input shafts; and
an output system, comprising:
   first and second output shafts, provided parallel to the first and second input shafts, and provided with output gearwheels, respectively;
      a forward gear mechanism, comprising:
         forward driven gearwheels, provided on the first and second output shafts, and operable to mesh with the forward drive gearwheels of the first and second input shafts; and
         synchromesh mechanisms, operable to transmit rotational power to the forward driven gearwheels; and
      a reverse gear mechanism, comprising:
         a reverse driven gearwheel, provided on one of the first and second output shafts;
         a synchromesh mechanism, operable to transmit rotational power to the reverse driven gearwheel; and
         an idler gearwheel, being rotatable together with a forward driven gearwheel for a low gear which is disposed on the other of the first and second output shafts, and operable to mesh with the reverse driven gearwheel, wherein
a reduction ratio of each of the output gearwheels is set such that a final reduction ratio of one of the first and second output shafts which outputs rotational power from the reverse driven gearwheel is larger than a final reduction ratio of the other of the first and second output shafts.

The forward driven gearwheel for the low gear may be a driven gearwheel for a second gear.

The second output shaft may be provided with a synchromesh mechanism for transmitting rotational power to the forward driven gearwheel for the low gear. The idler gearwheel may be adjacent to the forward driven gearwheel for the low gear. The forward driven gearwheel for the low gear may be disposed between the idler gearwheel and the synchromesh mechanism.

According to the invention, there is also provided a double clutch transmission comprising:
a first input shaft;
a second input shaft, adapted to be fitted on an outer circumferential surface of the first input shaft, each of the first and second input shafts, provided with a drive gearwheel;
a first clutch, operable to transmit an output of an engine to the first input shaft;
a second clutch, operable to transmit the output of the engine to the second input shaft;
a first output shaft, parallel to the first and second input shafts, and provided with a first output gearwheel and a reverse driven gearwheel; and
a second output shaft, parallel to the first and second input shafts, and provided with a second output gearwheel, a forward driven gearwheel operable to mesh with the drive gearwheel and an idler gearwheel that is rotatable together with the forward driven gearwheel and is operable to mesh with the reverse driven gearwheel, wherein
a reduction ratio of the first output gearwheel and a reduction ratio of the second output gearwheel are set such that a final reduction ratio of the first output shaft is larger than a final reduction ratio of the second output shaft.

The forward driven gearwheel may be a driven gearwheel for a second gear.

The second output shaft may be provided with a synchromesh mechanism for transmitting rotational power to the forward driven gearwheel. The idler gearwheel may be adjacent to the forward driven gearwheel. The forward driven gearwheel may be disposed between the idler gearwheel and the synchromesh mechanism.
Fig. 1 is a schematic drawing of a double clutch transmission according to an embodiment of the invention.
Fig. 2 is a front sectional view of the double clutch transmission.
Fig. 3 is a side sectional view of the double clutch transmission.

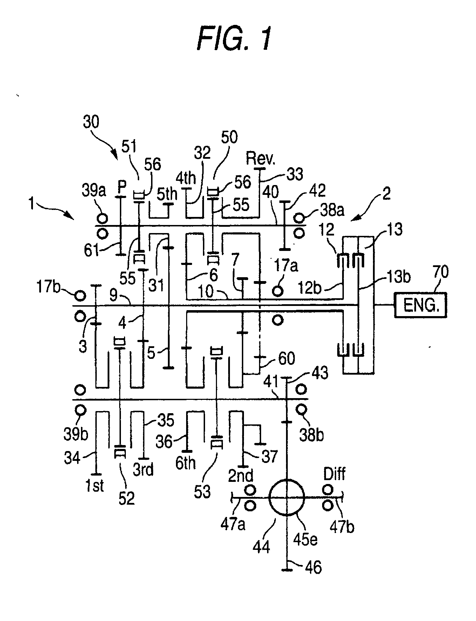

Hereinafter, the invention will be described based on a preferred embodiment which is shown in Figs. 1 to 3.

Fig. 1 shows a schematic configuration of a transversely mounted double clutch transmission having, for example, seven gears; six forward gears and one reverse gear, and in the figure, reference numeral 1 denotes a main body portion of the double clutch transmission. A construction in which an input system 2 and an output system 30 are combined is adopted for the main body portion 1. Of these systems, in the input system 2, a construction is adopted which is made up of a combination of two input shafts 9, 10 and two clutches 12, 13. In the output system 30, a construction is adopted in which two output shafts 40, 41 are used on which driven gearwheels 31 to 37 and synchromesh mechanisms 50 to 53 are disposed.

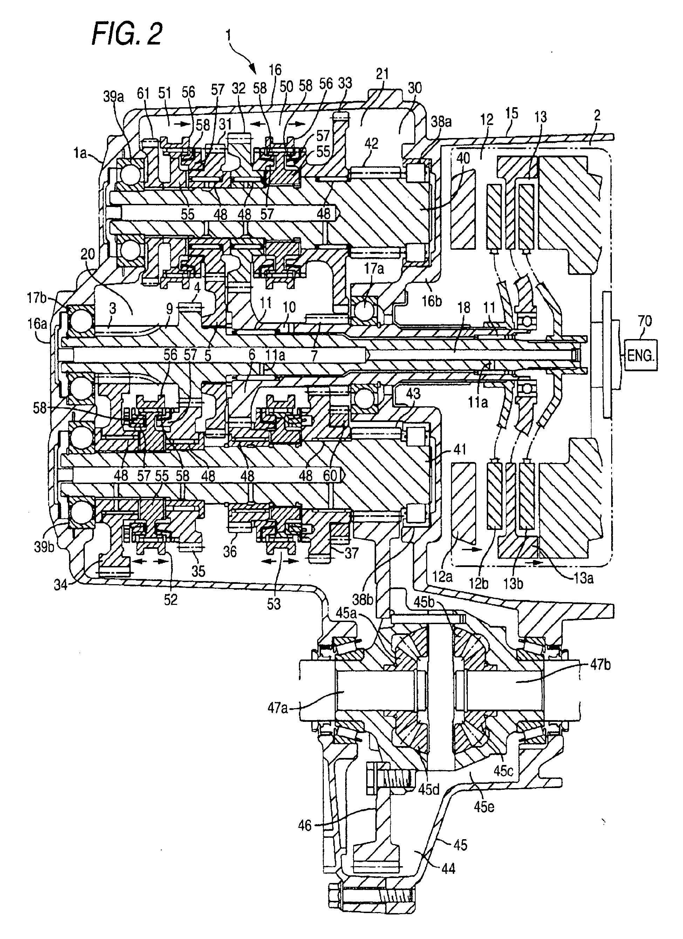

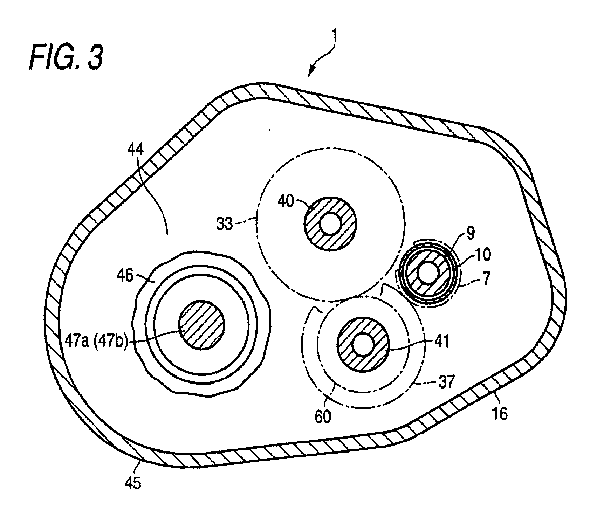

Fig. 2 shows a front sectional view showing the development of the double clutch transmission which illustrates a detailed construction thereof, and Fig. 3 shows a side sectional view of the double clutch transmission. Referring to Figs. 2 and 3, the construction of the input system 2 will be described. In the figures, reference numeral 15 denotes a clutch case, and 16 a transmission case which is connected in series to the clutch case 15. The clutches 12, 13 are accommodated in the clutch case 15. These clutches 12, 13 are made up, for example, by aligning two pusher plates 12a, 13a which connect to an output shaft of an engine 70 and two independent dry clutch plates 12b, 13b which connect to input shafts 9, 10, respectively, alternately in an axial direction, whereby the pusher plates 12a, 13a can be made to be brought into tight contact with and separation from the clutch plates 12b, 13b, respectively, when the pusher plates 12a, 13b are caused to move (operate).

The input shafts 9, 10 are provided within the transmission case 16. Of these input shafts 9, 10, a shaft member which has a through hole 18 provided along an axial center thereof for passage of a lubricating oil (not shown) is used for the input shaft 9. This shaft member is disposed in such a manner as to extend from the vicinity of an opening in the clutch case 15 to a deep portion in the interior of the transmission case 16, or, specifically speaking, to the vicinity of an end wall 16a which lie on an opposite side of the transmission case 16 to a side thereof which faces the clutches 12, 13. The remaining input shaft 10 is made up of a tubular shaft member and is fitted on an outer circumferential surface of the input shaft 9. In addition, needle bearings 11, which constitute bearing portions, are interposed between the outer circumferential surface of the input shaft 9 and an inner circumferential surface of the input shaft 10, whereby both the input shafts 9, 10 are made to freely rotate relative to each other. In addition, reference numeral 11a denotes a through hole which routes the lubricating oil from the interior of the input shaft 10 to the needle bearing 11. The input shaft 10 covers the input shaft 9 from one end lying to face the clutches 12, 13 to substantially a half-way point to the other end which resides within the transmission case 16. Then, the resulting dual-shaft intermediate portion is supported by a bearing 17a which is attached to an end wall 16b which partitions between the clutch case 15 and the transmission case 16. A transmission case rear end side end portion of the input shaft 9 is supported by a bearing 17b which is attached to the end wall 16a. Thus, the input shaft 9 is supported rotatably by virtue of the support by the bearings 17a, 17b in the ways described above, and the input shaft 10 is supported in such a manner as to rotate about the axial center of the input shaft 9. The end portion of the input shaft 9 which projects into the clutch case 15 is connected to the clutch 13 or, specifically, a clutch plate 13a of the clutch 13, and similarly, an end portion of the input shaft 10 which projects into the clutch case 15 is connected to the clutch 12 or, specifically, a clutch plate 12a of the clutch 12, whereby when the clutch 13 is applied, rotational power outputted from the engine 70 is transmitted to the input shaft 9, whereas when the clutch 12 is applied, the rotational power outputted from the engine 70 is transmitted to the input shaft 10. Namely, the rotational power of the engine 70 is configured to be transmitted selectively to the input shaft 9 or the input shaft 10 when the clutches 12, 13 are operated accordingly.

The drive gearwheels 3 to 7 are provided on the input shafts_ 9, 10 in such a manner as to be divided into two predetermined gear group. To be specific, forward gears (first to sixth gears) are divided into an even-numbered gear group and an odd-numbered gear group, and the drive gear wheels 3 to 5 which correspond to the odd-numbered gear group of the gear groups so divided are provided on the input shaft 9. Specifically, the drive gearwheels of the odd-numbered gear group are provided in such a manner that the drive gearwheel 3 for the first gear, the drive gearwheel 4 for the third gear and the drive gearwheel 5 for the fifth gear are provided in that order from a point adjacent to the bearing 17b (a rear end side of the transmission) on a shaft portion 9a (of the input shaft 9) which projects from the input shaft 10.

The drive gearwheels corresponding to the even-numbered gear group are provided on the input shaft 10. Specifically, the drive gearwheels of the even-numbered gear group are provided on the input shaft 10 in such a manner that the drive gearwheel 6 which functions as drive gearwheels for the fourth and sixth gears and the drive gearwheel 7 for the second gear are provided in that order from the rear end side end portion of the transmission on the input shaft 10. By this configuration, when the clutch 13 is applied, the rotational power of the engine 70 is transmitted to the drive gearwheels 3 to 5 for the odd-numbered gears, whereas when the clutch 12 is applied, the rotational power of the engine 70 is transmitted to the drive gearwheels 6, 7 for the even-numbered gears.

On the other hand, to describe the output system 30 by reference to Figs. 2 and 3, both the output shafts 40, 41 are provided within the transmission case 16 in such a manner as to be in parallel with the input shafts 9, 10. In particular, as is shown in Fig. 3, the output shaft 40 is provided at a point above the dual shaft construction portion of the input shafts 9, 10, which is held between the output shafts 40, 41, while the output shaft 41 is provided at a point below the same portion of the input shafts 9, 10. These output shafts 40, 41 are disposed in parallel with the input shafts 9, 10 with end portions thereof which are situated to face the clutches 12, 13 aligned with each other at the end wall 16b. In addition, the aligned ends of the output shafts 40, 41 are rotatably supported by bearings 38a, 38b which are built into the end wall 16b. The remaining ends of the output shafts 40, 41 which are situated on the rear end side of the transmission are rotatably supported by bearings 39a, 39b which are built into the end wall 16a. In addition, output gearwheels 42, 43 are provided respectively at the end portions of the output shafts 40, 41 which are situated to face the clutches 12, 13. Reduction ratios of the output gears 42, 43 are set such that a final reduction ratio of the output shaft 40 which is disposed upwards becomes larger than- a final reduction ratio of the output shaft 41 which is disposed downwards. These output gearwheels 42, 43 are made to mesh with a differential mechanism 44 which is mounted on a side portion of the transmission case 16. Specifically, the differential mechanism 44 is accommodated within a differential case 45 which is formed on the side portion of the transmission case 16 and is configured to include, respective elements specifically such as a differential gear portion 45e which is made up of a combination of pinion gears 45a to 45d, a ring gear 46 (a reduction gear) which inputs rotation into the differential gear portion 45e and axles 47a, 47b which transmit the rotational power which is distributed at the differential gear portion 45e to left and right drive wheels (not shown). The output gearwheels 42, 43 are made to mesh with the ring gear 46 of the differential mechanism 44.

The driven gearwheels 31 to 36 are allocated on the output shafts 40, 41 which are constructed in the way described above in such a manner that the number of gears on the output shaft 40 becomes less than the number of gears on the output shaft 41. Specifically, the three driving gearwheels such as the driven gearwheel 31 for the fifth gear which meshes with the drive gearwheel 5, the driven gearwheel 32 for the fourth gear which meshes with the drive gearwheel 6 and the driven gearwheel 33 for the reverse gear are disposed in that order from the bearing 39a side on the output shaft 40. The four driven gearwheels such as the driven gearwheel 34 for the first gear which meshes with the drive gearwheel 3, the driven gearwheel 36 for the sixth gear which meshes with the drive gear 6 and the drive gearwheel 37 for the second gear which meshes with the drive gearwheel 7 are disposed in that order from the bearing 39b side on the output shaft 41. These driven gearwheels 31 to 37 are made to be supported rotatably on outer circumferential surfaces of the output shafts 40, 41 by the use of needle bearings 48 which constitute bearing portions.

The synchromesh mechanisms 50 to 53 are also provided to be allocated on the output shafts 40, 41 in such a manner as to match the layout of the driven gearwheels 31 to 37 which is described above. Specifically, on the output shaft 40, the synchromesh mechanism 50 which is adapted to be shifted in two directions for selection of the fourth gear and the reverse gear is disposed between a shaft portion between the driven gearwheel 32 (for the fourth gear) and the driven gearwheel 33 (for the reverse gear), and the synchromesh mechanism 51 which is adapted to be shifted in one direction for selection of the fifth gear is disposed on a shaft portion which lies towards the bearing 39a across the driven gearwheel 31 (for the fifth gear). In addition, on the output shaft 41, the synchromesh mechanism 52 which is adapted to be shifted in two directions for selection of the first gear and the third gear is disposed between a shaft portion between the driven gearwheel 34 (for the first gear) and the driven gearwheel 35 (for the third gear), and the synchromesh mechanism 53 which is adapted to be shifted in two directions for selection of the sixth gear and the second gear is disposed between a shaft portion between the driven gearwheel 36 (for the sixth gear) and the driven gearwheel 37 (for the second gear). Due to the arrangement of the gears and the synchromesh mechanisms, an end portion of the upper output shaft 40 is retracted further towards the clutches 12, 13 than an end portion of the lower output shaft 41 by an extent equal to a difference in the number of gears provided between the output shafts 40, 41.

A construction is adopted for each of the synchromesh mechanisms 50, 52, 53 which are adapted to be shifted in two directions in which a synchronizer sleeve 56 is assembled axially slidably on an outer circumferential portion of a synchronizer hub 55 which is spline fitted on a shaft portion, a pair of synchronizer cones 57 are formed on each of the gearwheels which are disposed on both sides of the synchronizer hub 55, and a pair of synchronizer rings 58 are fittingly passed on an outer coned circumferential surface of the pair of synchronizer cones 57, respectively (the reference numerals being imparted to the synchromesh mechanisms 50, 52). By this construction, when the synchronizer sleeve 56 is caused to slide in either of axial directions, the output shaft 40 and the output shaft 41 are brought into engagement (synchronous mesh) with the driven gearwheels of the respective gears by virtue of friction between the synchronizer ring 58 and the synchronizer cone 57 while a difference in rotational speed being reduced, whereby transmission of rotational power is performed therebetween.

A construction is adopted for the one-way synchromesh mechanism 51 in which the synchronizer cone 57 and the synchronizer ring 58 which are situated on one side of the two-way synchromesh mechanisms 50, 52 are omitted and the synchromesh mechanism 51 is made to be shifted only in a direction in which it moves away from the bearing 39a. Namely, it is configured such that when the synchronizer sleeve 56 is caused to slide towards the driven gearwheel 31, the output shaft 40 is brought into engagement with the driven gearwheel 31 for the fifth gear by virtue of friction while reducing the difference in rotational speed.

A reverse idler gearwheel 60 is mounted concentrically on a side portion of the driven gearwheel 37 (for the second gear) which is opposite to a side thereof which faces the synchromesh mechanism 53. A gearwheel whose gearwheel diameter is smaller than that of the driven gearwheel 37 is used for the idler gearwheel 60. This idler gearwheel 60 meshes with the driven gearwheel 33 for the reverse gear on the output shaft 40, whereby when the reverse driven gearwheel 33 is brought into engagement with the output shaft 40 by the synchromesh mechanism 50, a reverse rotational output which is reduced in speed by a reduction ratio of the second gear, a reduction ratio of the reverse gear and a final reduction ratio of the output shaft 40 is made to be outputted from the output shaft 40 to the differential mechanism 44.

Namely, a forward gear mechanism 20 is made up of a combination of the forward driven gearwheels 31, 32, 34 to 37 and the synchromesh mechanisms 50 to 53, and a reverse gear mechanism 21 is made up of a combination of the reverse driven gearwheel 33, the synchromesh mechanism 50, the idler gearwheel 60 and the output gearwheels 42, 43.

On the other hand, a parking gearwheel 61 is provided at the transmission rear end side end portion (the retracted end portion) of the output shaft 40 whose overall length is shorter. This park gearwheel 61 is provided adjacent to an outside (an axial end side) of the synchromesh mechanism 51. This parking gearwheel 61 is made to be brought into engagement with and disengagement from a gear locking pawl member 62 which is assembled to the transmission case 16 as is shown in Fig. 3, whereby when parking the vehicle, the output shaft 40 is made to be locked through engagement with the pawl member 62.

On the other hand, engagement and disengagement operations of the clutches 12, 13 (the pusher plates 12a, 13a) and shift selecting operations of the synchromesh mechanisms 50 to 53 are implemented by actuators (not shown) which are controlled through instructions issued from, for example, an ECU. Thus, the double clutch transmission is configured such that the loss of engine power in transmission resulting from the disruption of power transmission is suppressed to a minimum level according to gear ratio change information set in the ECU.

Namely, to describe the function of the double clutch transmission, when shifted into the first gear, firstly, the synchronizer sleeve 56 of the synchromesh mechanism 52 of the odd-numbered gear group is caused to slide to the first gear side by an actuator which is activated by a change-speed instruction outputted from the ECU, so that the driven gearwheel 34 for the first gear is brought into engagement with the output shaft 41, whereby the first gear is selected. Thereafter, the clutch 13 is operated to be engaged by an actuator which is activated by a similar change-speed instruction from the ECU. When the clutch 13 is so operated, the gear shift to the first gear is completed, whereby the output of the engine 70 is changed in speed along the transmission line of the odd-numbered system in which the output is transmitted from the input shaft 9 to the output shaft 41 via the drive gearwheel 3 for the first gear and the driven gearwheel 34 for the first gear. Then, the rotation whose speed has been so changed is outputted from the output gearwheel 43 to the differential mechanism 44, so as to be transmitted to the left and right axles 47a, 47b, whereby the vehicle is driven in the first gear. Note that the clutch 12 is operated to be disengaged.

While the vehicle is running in the first gear, when a change-speed instruction to the second gear is outputted, by making use of the state in which the clutch 13 is engaged while the clutch 12 is disengaged, the synchronizer sleeve 56 of the synchromesh mechanism 53 of the even-numbered gear group is caused to slide to the second gear side, so as to bring the driven gearwheel 37 for the second gear into engagement with the output shaft 41 which is rotating at the current vehicle speed, whereby the drive gearwheel 7 of the second gear which is the next higher gear to be engaged is synchronized with the vehicle speed for selection of the second gear. Namely, the preparation for a gear ratio change for the next higher gear is completed. Thereafter, the clutch 12 is engaged while the clutch 13 is disengaged, whereby the power transmission from the engine 70 is switched from the input shaft 9 to the input shaft 10. Then, the output of the engine 70 is changed in speed along the transmission line of the even-numbered system in which the output of the engine 70 is transmitted from the input shaft 10 to the output shaft 40 via the drive gearwheel 7 for the second gear and the driven gearwheel 37 for the second gear, whereby the rotation whose speed is so changed is outputted from the output gearwheel 43 to the differential mechanism 44 (the gear shift to the second gear is completed). Then, the vehicle is shifted into the second gear on the spot to thereby be run in the second gear.

While the vehicle is running in the second gear, when a change-speed instruction to the third gear is outputted, by making use of the state in which the clutch 12 is engaged while the clutch 13 is disengaged, the synchronizer sleeve 56 of the synchromesh mechanism 52 of the odd-numbered gear group is caused to slide to the third gear side, so as to bring the driven gearwheel 35 for the third gear into engagement with the output shaft 40 which is rotating at the current vehicle speed, whereby the drive gearwheel 4 of the third gear which is the next higher gear to be engaged is synchronized with the vehicle speed for selection of the third gear. Namely, the preparation for a gear ratio change for the next higher gear is completed. Thereafter, the clutch 12 is disengaged while the clutch 13 is engaged, whereby the power transmission from the engine 70 is switched again from the input shaft 10 to the input shaft 9. Then, the output of the engine 70 is changed in speed along the transmission line of the odd-numbered system in which the output of the engine 70 is transmitted from the input shaft 9 to the output shaft 41 via the drive gearwheel 4 for the third gear and the driven gearwheel 35 for the third gear, whereby the rotation whose speed is so changed is outputted from the output gearwheel 43 to the differential mechanism 44 (the gear shift to the third gear is completed) . Then, the vehicle is shifted into the third gear on the spot to thereby be run in the third gear.

Then, the gears are selected alternately between the odd-numbered gear group and the even-numbered gear group by the synchromesh mechanisms 50, 51, 53 and the clutches 12, 13 in similar ways to those described above, and by switching the clutches 12, 13 alternately, gear shifts to the remaining fourth, fifth and sixth gears will be implemented continuously in similar ways to those in which the gear shifts to the first to third gears are implemented while suppressing the power transmission loss to the minimum level.

In addition, for a gear shift to the reverse gear, the synchronizing sleeve 56 of the synchromesh mechanism 50 is caused to slide to the reverse gear side from a state where the clutches 12, 13 are both disengaged, so as to bring the reverse gearwheel 33 into engagement with the output shaft 40, whereby the gear for the reverse gear is selected. Thereafter, the clutch 12 is operated to be engaged, whereby the output from the engine 70 is, as is shown in Figs. 2 and 3, transmitted from the input shaft 10 to the differential mechanism 44 via the drive gearwheel 37 for the second gear, the driven gearwheel 37 for the second gear, the idler gearwheel 60 which is mounted on the gearwheel 37, the reverse driven gearwheel 33, the output shaft 40, and the output gearwheel 42.

Namely, in the reverse gear, a reverse rotational output is reduced in speed by a final reduction ratio of the rotational shaft 41 in addition to a reduction ratio of the second gear (which results from meshing of the idler gearwheel and the reverse driven gearwheel) and a reduction ratio of the reverse gear (which results from meshing of the idler gearwheel with the reverse driven gearwheel) for transmission to the differential mechanism 44.

Because of this, the reduction ratio of the reverse gear can be increased while securing the construction in which the idler shaft is unnecessary. Namely, the reduction ratio of the reverse gear can be increased while realizing the compact double clutch transmission. Moreover, even in the event that gearwheels whose diameters are small are used for the driven gearwheels for the forward low gears and the reverse gear from the necessity of realizing a compact double clutch transmission, a sufficiently large reduction ratio can be secured for the reverse gear by increasing the final reduction ratio of the output shaft 40.

Moreover, even with the construction in which the idler gearwheel 60 is provided on the driven gearwheel 37 for the second gear which has a high degree of freedom in placement, a large reduction ratio which is sufficiently suitable for the reverse gear can be secured by making use the final reduction ratio of the output shaft 40.

In addition, since the idler gearwheel 60 is not disposed adjacent to the synchromesh mechanism 53 across the driven gearwheel 37 for the second gear, the gearwheel diameter of the idler gearwheel 60 is not restricted by the synchromesh mechanism 53, thereby making it possible to set the gearwheel diameter of the idler gearwheel 60 large.

According to an aspect of the invention, since the reduction ratio of the reverse gear is made up of the reduction ratio which results from the reduction ratio of the output gearwheel in addition to the reduction ratio of the low gear which results from meshing of the drive gearwheel with the driven gearwheel for the low gear and the reduction ratio of the reverse gear which results from meshing of the idler gearwheel with the driven gearwheel for the reverse gear, the reduction ratio of the reverse gear can be increased while maintaining the construction in which the idler shaft is unnecessary, that is, while realizing the compact double clutch transmission.

According to an aspect of the invention, the reduction gear ratio which is sufficiently suitable for the reverse gear can be secured by the driven gearwheel for the second gear which has the high degree of freedom in placement.

According to an aspect of the invention, since the idler gearwheel is not adjacent to the synchromesh mechanism, the gearwheel diameter of the idler gearwheel can be increased without being affected or restricted by the synchromesh mechanism.

Note that the invention is not such as to be limited to the embodiment that has been described heretofore but may be modified variously without departing from the scope of the invention.

## Claims

1. A double clutch transmission, comprising:
an input system, comprising:
an input shaft portion, comprising:
a first input shaft, provided with forward drive gearwheels of one gear group of two predetermined gear groups into which a plurality of forward gears are divided; and
a second input shaft, provided with forward drive gearwheels of the other gear group, and being rotatable about an axial center of the first input shaft on an outer circumferential surface of the first input shaft, and
clutches, provided at end portions of the first and second input shafts, respectively, for transmitting rotational power of an engine to the first or second input shafts; and
an output system, comprising:
first and second output shafts, provided parallel to the first and second input shafts, and provided with output gearwheels, respectively;
a forward gear mechanism, comprising:
forward driven gearwheels, provided on the first and second output shafts, and operable to mesh with the forward drive gearwheels of the first and second input shafts; and
synchromesh mechanisms, operable to transmit rotational power to the forward driven gearwheels; and
a reverse gear mechanism, comprising:
a reverse driven gearwheel, provided on one of the first and second output shafts;
a synchromesh mechanism, operable to transmit rotational power to the reverse driven gearwheel; and
an idler gearwheel, being rotatable together with a forward driven gearwheel for a low gear which is disposed on the other of the first and second output shafts, and operable to mesh with the reverse driven gearwheel,
**characterized in that**
a reduction ratio of each of the output gearwheels is set such that a final reduction ratio of one of the first and second output shafts which outputs rotational power from the reverse driven gearwheel is larger than a final reduction ratio of the other of the first and second output shafts.

2. The double clutch transmission as set forth in claim 1, **characterized in that**
the forward driven gearwheel for the low gear is a driven gearwheel for a second gear.

3. The double clutch transmission as set forth in claim 1 or 2, **characterized in that**
the second output shaft is provided with a synchromesh mechanism for transmitting rotational power to the forward driven gearwheel for the low gear,
the idler gearwheel is adjacent to the forward driven gearwheel for the low gear, and
the forward driven gearwheel for the low gear is disposed between the idler gearwheel and the synchromesh mechanism.

4. A double clutch transmission comprising:
a first input shaft;
a second input shaft, adapted to be fitted on an outer circumferential surface of the first input shaft, each of the first and second input shafts, provided with a drive gearwheel;
a first clutch, operable to transmit an output of an engine to the first input shaft;
a second clutch, operable to transmit the output of the engine to the second input shaft;
a first output shaft, parallel to the first and second input shafts, and provided with a first output gearwheel and a reverse driven gearwheel; and
a second output shaft, parallel to the first and second input shafts, and provided with a second output gearwheel, a forward driven gearwheel operable to mesh with the drive gearwheel and an idler gearwheel that is rotatable together with the forward driven gearwheel and is operable to mesh with the reverse driven gearwheel, wherein
a reduction ratio of the first output gearwheel and a reduction ratio of the second output gearwheel are set such that a final reduction ratio of the first output shaft is larger than a final reduction ratio of the second output shaft.

5. The double clutch transmission as set forth in claim 4, wherein
the forward driven gearwheel is a driven gearwheel for a second gear.

6. The double clutch transmission as set forth in claim 4 or 5, wherein
the second output shaft is provided with a synchromesh mechanism for transmitting rotational power to the forward driven gearwheel,
the idler gearwheel is adjacent to the forward driven gearwheel, and
the forward driven gearwheel is disposed between the idler gearwheel and the synchromesh mechanism.
